(19) Europäisches Patentamt
European Patent Office
Office européen des brevets

(11) Publication number: **0 417 901 A2**

# (12) EUROPEAN PATENT APPLICATION

(21) Application number: **90308520.7**

(22) Date of filing: **02.08.90**

(51) Int. Cl.[5]: **C08F 220/18**, C09D 133/06, C08F 265/04

(30) Priority: **11.09.89 US 406957**

(43) Date of publication of application: **20.03.91 Bulletin 91/12**

(84) Designated Contracting States: **DE FR GB IT SE**

(71) Applicant: **MINNESOTA MINING AND MANUFACTURING COMPANY**
**3M Center, P.O. Box 33427**
**St. Paul, Minnesota 55133-3427(US)**

(72) Inventor: **Feichtmeier, Hans Georg, C/o Minnesota Mining and Manufacturing Co., 2501 Hudson Road, P.O.Box 33427**
**St. Paul, Minnesota 55133-3427(US)**

(74) Representative: **Baillie, Iain Cameron et al**
**c/o Ladas & Parry Isartorplatz 5**
**W-8000 München 2(DE)**

## (54) Abrasion resistant ionomer film.

(57) An abrasion resistant terpolymer comprising from about 25 mole % to about 65 mole % of an alkyl acrylate monomer, the alkyl groups of which have an average of 4 to 12 carbon atoms, from about 10 mole % to about 50 mole % of a strongly polar monomer, and from about 10 mole % to about 50 mole % of a moderately polar monomer selected from cyclic N-vinyl lactams, wherein the strongly polar monomer and the N-vinyl lactam are present in a ratio of from about 0.8 to about 1.2, and the polar monomers are present in a ratio to said alkyl acrylate monomer of from about 0.4:1 to about 0.85:1.

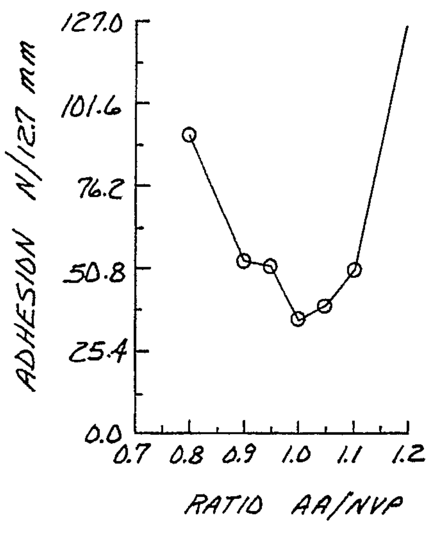


Fig. 5

EP 0 417 901 A2

# ABRASION RESISTANT IONOMERIC FILM

## Background of the Invention

### Field of the Invention

The invention relates to acrylic copolymers and copolymer compositions which are suited for making clear non-adhesive sheet materials such as films and coated substrates, such materials providing very high impact toughness levels. The copolymers contain at least three different vinyl monomers of which two belong to the acrylate series while the third monomer is an N-vinyl lactam, preferably an N-vinylpyrrolidone.

### Description of the Related Art

In industry, there has long existed a strong interest in the protection of paints, top coats and colored coatings on plastic and metal surfaces. This interest is particularly pronounced in the automotive industry, since automobiles have plastic and metal components in a variety of colors. Uses contemplated for such coatings are e.g., ornamental films on plastic hub caps and bumper surfaces of vehicles. The development and provision of improved weather-resistant flexible film materials which exhibit good physical strength and can be provided in a clear, colored, printed, painted, metallized or pigmented form would significantly advance the field of protective films and coatings for plastic and metal components.

Among the physical properties, a high impact strength has primary importance since automobiles externally coated with films are subject to impact during the operation thereof, e.g. by small stones or gravel thrown up from road surfaces, hail, and the like.

Some of the polymers and copolymers presently available exhibit some desirable properties, however, none exhibit a satisfactory overall spectrum of properties.

European Patent No. 95,093 describes a self-adhesive ornamental film resistant to stone impact. The film consists of a polymer blend of polyvinyl chloride and an ethylene-vinylacetate copolymer and incorporates an acrylate adhesive which imparts adhesive properties to the film material. The film backing supporting the adhesive has a polyurethane primer thereon. The copolymer blend is thermally treated to be drawn out into films and then laminated by means of the polyurethane primer with an acrylate adhesive product. This patent proposes that adhesive films of this type may be used as impact-resistant ornamental films for automobiles, e.g., for the protection of color-painted metal surfaces. It takes high calendar thickness to obtain satisfactory impact toughness levels, however the film requires double- and triple-lamination, which in itself calls for a costly energy-intensive thermal shaping treatment. The patent is silent as to abrasion-resistance and other desirable properties such as resistance to weather or gasoline.

U.S. Patent No. 4,650,845 describes UV-curable polymer compositions suited for making abrasion-resistant cast articles. The compositions are obtained by polymerizing a mix of up to 100 parts of a urethane polyacrylic ester and up to 100 parts of a second component consisting of 30 to 60 wt. % of a polyacrylic ester having 4 to 10 acryloyloxy groups; 20 to 70 wt % of a modifier for controlling polymerization shrinkage and up to 30 wt. % of a monomer diluent. Surface coatings are in fact obtained, but no film or foil materials are made. The patent is silent as to the impact toughness or the weather resistance of cast articles made in this manner. The production of these abrasion-resistant compositions requires expensive materials such as acrylated polyurethanes in order to obtain the polymer product.

European Patent Application No. 297,792, (Levens) published April 1, 1989 describes heat-activatable adhesive compositions suited for use as adhesive films and strips. The composition must comprise an alkyl acrylate monomer, and at least one polar monomer is an amount effective to self-crosslink. Due to the self-crosslinking, the adhesive will withstand reheating to its bonding temperature and above.

Polar monomers disclosed as useful in Levens include strongly polar monomers such as acrylic acid, or moderately polar monomers such as N-vinyl pyrrolidone. A typical composition consists of about 50 to 70% isooctyl acrylate (IOA) and corresponding 50 to 30% acrylic acid. A terpolymer composition contains 40 to 65% IOA and 60 to 35% of a mixture of acrylic acid (AA) and N-vinyl-pyrrolidone (NVP), which may be crosslinked to form an adhesive film under UV radiation in the presence of a photoinitiator such as 2,2-bis-isobutyronitrile or 2,2′-dimethyoxy-2-phenylacetophenone (Irgacure 651). It is specifically stated that the compositions may not contain any other reactive diluents. The resultant films are non-adhesive at room temperature; when heated, they develop aggressive adhesion.

U.S. Patent 4,364,972 (Moon) discloses the use of N-vinylpyrrolidone as the polar copolymerizable monomer in the acrylate adhesive copolymer to provide a pressure-sensitive adhesive with high adhesion to automotive paints.

European Patent Application 234,749 describes polymer hydrogels suited for contact lenses and exhibiting a water reception between 60 and 70 wt.%. The underlying monomer composition is based on N-vinylpyrrolidone, a hydroxyalkylmethacrylate and lower alkyl acrylate ester compounds. No acrylic acid units are present. Other NVP-containing polymers have also been proposed for soft contact lenses because of their good water reception properties (DE-OS 23 34 010, DE-OS 23 34 011, European Patent 106,650).

When the adhesive properties of acrylic ester/acrylic acid copolymers are adjusted by incorporating in the polymer a specific amount of a monomer forming n-vinyl lactam units, particularly N-vinylpyrrolidone (NVP), within specific preferred composition ranges, as defined by the diagram sites shown in Figure 1, the materials made therefrom surprisingly exhibit high impact toughness, and are totally nonadhesive.

The object of the present invention is to provide an acrylate copolymer composition, having substantially no inherent adhesiveness, which exhibits physical properties such as sensitivity to moisture, weather resistance, impact toughness and tensile strength. Physical characteristics of individual copolymers may be varied by adjusting the molar ratios of the monomers as desired to provide low-adhesion basic materials suited for deformation into non-adhesive films or sheets.

Another object of the invention is the use of the novel copolymer compositions for producing films and foils and coated substrates comprising a coating containing at least one of the instant copolymer compositions.

## Summary of the Invention

Terpolymer compositions of the invention comprise

(a) from about 25 mole % to about 65 mole % of an alkyl acrylate monomer,

(b) from about 10 mole % to about 50 mole % of a strongly polar monomer,

(c) from about 10 mole % to about 50 mole % of a moderately polar monomer selected from cyclic N-vinyl lactam, wherein the ratio of the strongly polar monomer to the N-vinyl lactam is from about 0.8 to about 1.2, and the ratio of the polar monomers to the alkyl acrylate monomer is from about 0.4:1 to about 0.85:1.

The invention also provides nonadhesive films made from such compositions. The films are useful for, *inter alia* , coatings, abrasion resistant films, and fabric treatments.

## Description of the Drawings

Figure 1 is a triangle diagram which shows the composition of the terpolymer in the finished composition.

Where further additives such as IPN polymer or an optional monomer are included by polymerization in the finished composition, the diagram corresponds to the composition projected onto the mandatory components. It has surprisingly been found that certain preferred ranges stand out from the inventive ratios of the monomers; these ranges are shown by polygons marked with the characters E-F-G-H-I and K-L-M-H-N (corner coordinates). Points lying on the base lines of the triangle diagram are copolymer compositions to be considered comparison examples.

Figure 2 shows percentage elongation related to tensile strength ($N/mm^2$) and for a preferred IOA/AA/NVP composition in a mole ratio of (0.34:0.20:0.20) Curve X, the range in which the inventive nonadhesive terpolymer film can lie, while the areas for the copolymers IOA/AA (0.34:0.20) Curve Y, and IOA/NVP (0.34:0.20) Curve Z, which are used for comparison, exhibit a high yield strength, but a tensile strength which is unsatisfactory on the whole; the products in this area are aggressive adhesives. This example demonstrates the internal strength of the non-adhesive film forming terpolymer compositions of the invention in dependence on their monomer composition. The underlying terpolymer of the invention was obtained by first making a photopolymerized prepolymer and then polymerizing under UV radiation.

Figure 3a is a tensile strength graph, which shows a pronounced peak in the tensile strength in an AA/NVP ratio of about 0.9 to 1.05. The AA/NVP mole ratio is 0.63.

Figure 3b depicts the dependence of the 50% modulus (modulus at 50% elongation) on the AA/NVP mole ratio. Again, the range of 0.9 to 1.1 is marked by a peak.

Figures 4a, and 4b are diagrams showing tensile strength ($N/mm^2$) or the 50% modulus versus the AA/NVP mole ratio, with the NVP/IOA mole ratio held at a constant 0.58 for a film 300 $\mu m$ thick. The pronounced peak at about unity (1 mole AA for 1 mole NVP) is clearly perceptible and allows the conjecture that it is permissible to rely on the chemical-ionic interactions taking place in the underlying terpolymer to explain the inner strength of the novel terpolymer compositions in their film, foil or sheet form.

For the inventive terpolymer compositions, Figure 5 confirms the surprising finding that their adhesion property is substantially suppressed or blocked in the area of the presumed maximum interaction between the strongly polar (here:AA) and the N-vinyl lactam (here: NVP). The Figure shows the adhesion in Newtons per 1.27 cm versus the AA/NVP mole ratio (abscissa) with the NVP/IOA mole ratio was held constant at 0.58.

## Detailed Description of the Invention

Preferred compositions of the invention comprise a terpolymer containing an alkyl acrylate monomer, and two polar copolymerizable monomers.

The alkyl acrylate monomer includes the mono- and diesters of the aforesaid acrylic acids with a mono- or polyvalent alcohol may be used wherein the alcoholic alkyl group has an average of from about 4 to 14 carbon atoms. Useful monomers include n-butyl, isobutyl, terbutyl, n-pentyl, 2-methylbutyl, 2-ethylpropyl, isopentyl(2), syn-hexyl and isohexyl, n-heptyl and isoheptyl, n-octyl and isooctyl, n-nonyl and isononyl, n-decyl and isodecyl, n-undecyl and isoundecyl, n-dodecyl and isododecyl. n-$C_{13}H_{27}$ as well as n$C_{14}H_{29}$ and iso-$C_{14}H_{29}$. In addition to the esterified monoalcohols, polyols, too, may be esterified, such as trivalent alcohols and alcohols from the sugar alcohol series. It should be understood that a broad variety of properties may be adjusted by properly selecting the alcoholic ester group. Preferable ester alcohols include C6 to C9 alkanols, with their isoalcohols being particularly advantageous. In the case of isoalcohols, the alkyl side chains preferably comprise methyl or ethyl groups only so as to prevent steric bonds from forming, as would be the case with a terbutyl group, for example. This does not exclude the possibility of more than one methyl or ethyl group being present in the side chain position, however.

Preferred monomers include isooctyl acrylate, butyl acrylate, isononyl acrylate, and dodecyl acrylate.

The polar copolymerizable monomers are selected such that a first polar monomer is selected from strongly polar monomers, and a second polar monomer is selected from moderately polar monomers.

Useful strongly polar monomers include acrylic acid, methacrylic acid and alkali and ammonium and alkali earth metal salts of acrylic acid, itaconic acid, hydroxyalkyl acrylates, cyanoalkyl acrylates, acrylamides or substituted acrylamides, maleic acid, fumaric acid, lower-alkyl substituted maleic and fumaric acid, 1-propin-or 2-propinecarboxylic acid ($CH=C-CH_2-COOH$) and the respective water soluble alkali, ammonium, substituted ammonium, and earth alkali salts. Preferred strongly polar monomers include acrylic acid, methacrylic acid, and itaconic acid.

Acrylic acid is highly preferred, with the presence of an additional acrylic acid compound from the above group, preferably in an amount of up to 10 wt. % relative to the incorporated acid unit, being optional. The term "acrylic acid" is used in this description to designate the group of the aforesaid monomers or polar monomers derived therefrom.

If the acrylic acid unit is present in a salt-forming form in an amount, e.g. up to more than 50 mole % of the acidic hydrogen group, and preferably between 20 and 45 mole % if an acidity modification is desired, the corresponding cation may be provided by substituted amines or amides, with the lower-alkyl substituted secondary and tertiary amines and the pyridinium, piperidinium pyrrolidonium and other heterocyclic nitrogen bases having five- or six-element rings and up to three nitrogen atoms attached to the ring in the molecule being particularly suitable.

The moderately polar monomer in the inventive terpolymer composition is an n-vinyl lactam preferably comprising bifunctional trimethylene, tetramethylene or pentamethylene group, optionally substituted with lower alkyl. Monosubstitution is preferred. Suitable N-vinyl lactams are N-vinyl-pyrrolidones and N-vinyl caprolactams, with the unsubstituted N-vinylpyrrolidone being particularly preferred. In the aforesaid N-vinyl lactams, more than one n-vinyl lactam may be polymerized, which may result in very specialized properties, particularly in the case of two different vinyl lactams.

Surprisingly, the inventive terpolymer compositions are not determined by the characteristics of either the strongly nor the moderately polar monomer used. Rather, the properties of the novel terpolymers have little resemblance to those of N-vinylpyrrolidone, (NVP), which is water-soluble and very brittle in its polymer form. Further, while acrylic acid ester/NVP or acrylic acid/acrylic acid ester copolymers are typical adhesives and acrylic acid /NVP copolymers are brittle and water soluble, the terpolymer compositions of the invention have little or no adhesion but are pliable and resistant to impact.

Preferred terpolymers comprise isooctyl acrylate, acrylic or methacrylic acid, and N-vinyl pyrrolidone. The ratio of the strongly polar monomer to the N-vinyl lactam is from about 0.8 to about 1.2, preferably from about 0.9 to about 1.1, more preferably about 1:1, and the ratio of each polar monomer to the alkyl acrylate monomer is from about 0.4:1 to about 0.85:1, preferably to about 0.8:1, most preferably to about 0.7:1. Coordinates of the compositions are listed in Table I below:

Table I

| Coordinates of the Compositions in Figure 1 (Mole Percents) | | | |
|---|---|---|---|
| Composition | Monomer (a) | Monomer (b) | Monomer (c) |
| | e.g. AA | e.g. IOA | e.g. NVP |
| E | 45 | 30 | 25 |
| F | 30 | 30 | 40 |
| G | 15 | 40 | 45 |
| H | 20 | 60 | 20 |
| I | 35 | 35 | 20 |
| Preferred: | | | |
| K | 37 | 33 | 30 |
| L | 30 | 33 | 37 |
| M | 20 | 53 | 27 |
| N | 27 | 53 | 20 |
| H | 20 | 60 | 20 |

This ratio of the composition implies nothing about a statistic or block-copolymeric arrangement, although statistically copolymerized polymers are one group in the preferred class of polymers. Another preferred group of these terpolymer compositions results from the polymerization of the strongly polar monomer and the alkyl acrylate monomer up to a specific conversion level and a subsequent polymerization together with the N-vinyl lactam so that the terpolymer so obtained does not correspond to a statistic distribution of monomer units. Rather, the inner block is a copolymer consisting predominantly of the alkyl acrylate and strongly polar monomer while the outer block or blocks consist of almost pure N-vinyl lactam or of a terpolymer block in which the amount of N-vinyl lactam is higher than for the terpolymer overall. A well-directed block copolymerization performed in the above sense is advantageous in that it becomes possible to adjust the claimed copolymer composition for very specific spectra of properties, e.g., block copolymerization to form terpolymers exhibiting a specific window of properties.

Where photopolymerization is desirable, the novel composition of the invention also contains a photoinitiator to induce polymerization of the monomers. Photoinitiators that are useful for polymerizing the acrylate monomer include the benzoin ethers, substituted benzoin ethers such as benzoin methyl ether or benzoin isopropyl ether, substituted acetophenones such as 2,2-diethoxy-acetophenone, and 2,2-dimethoxy-2-phenyl-acetophenone, substituted alpha-ketols such as 2-methyl-2-hydroxypropiophenone, aromatic sulphonyl chlorides such as 2-naphthalene sulphonyl chloride, and photoactive oximes such as 1-phenyl-1,2-propanedione-2-(O-ethoxycarbonyl) oxime. Generally, the photoinitiator is present in an amount of from about 0.01 part to about 1.0 part per 100 parts monomer weight (phr).

In addition to the monomers here presented as mandatory, it is possible to incorporate into the composition additional reactive ingredients as long as they do not substantially affect the ionomeric properties of the terpolymer. Such optional ingredients may be acrylic acid alkyl ester with a lower methyl to C3 alkyl group, acrylonitrile, acrylamide, N-C1-C12-alkyl-substituted acrylamide, acrylic acid esters of

amino alcohols with 1 to 6 carbon atoms and substituted with N-C1-C6-alkyl, vinyl alcohol, vinyl acetate, vinyl chloride, and the like. Such ingredients may be copolymerized into the terpolymer.

The photopolymerizable composition preferably contains a crosslinking agent to enhance cohesive strength. Suitable crosslinking agents include hydrogen abstracting carbonyls such as anthroquinone and benzophenone and their derivatives, as disclosed in U.S. 4,181,752 (Martens), and polyfunctional acrylates such as 1,6-hexanedioldiacrylate, trimethylolpropane triacrylate and 1,2-ethylene glycol diacrylate, as well as those disclosed in U.S. Patent No. 4,379,201, (Heilmann). Useful crosslinking agents which also function as photoinitiators are the chromophore-substituted halomethyl-s-triazines disclosed in U.S. Patent Nos. 4,330,590 (Vesley) and 4,329,384 (Vesley et al.), incorporated herein by reference.

The total amount of additional reactant, whether monomer or additional adjuvant should not be greater than 30 mole % of the total monomer units, preferably not more than 10 mole %.

The incorporation of optional reactants in the terpolymer composition may be used to enhance the desirable properties of the invention, such as tensile strength or strength to fracture particularly at low temperatures, transparence, abrasion resistance, low or limited water absorption and low to total lack of adhesiveness.

The inventive terpolymer compositions may additionally contain a nonreactant polymer which is soluble or dispersible in one of the monomers or in the monomer blend. Preferably, elastomeric polymer additives such as NBR rubber used. Another, particularly useful class of polymer additives are olefin/acrylic acid copolymers, particularly the ethylene/acrylic acid copolymers, which preferably are formed of up to 50 wt % acrylic acid units, the remainder ethylene, propylene or another olefin such as isopropylene, butylene-1 or butylene-2, butadiene and the like. If these additives are homogeneously soluble in the monomer or monomer blend, an inter-penetrating polymer network (IPN) will be present after the terpolymer composition has cured; this way, the adverse effects of diffusion and incompatibilities may be suppressed substantially. Preferably, the amount of IPN-forming polymers is about 0.5 to 40 phr. Particularly preferred are about 1 to 20 parts by weight. Surprisingly, it is possible for part of the strongly polar monomer to be not necessarily incorporated only in the terpolymer composition; it may be externally incorporated in the additive IPN polymer, so that additional possibilities of modification arise.

The terpolymer films may also contain a plasticizer such as dioctylphthalate or an oligomeric polyester plasticizer preferably in amounts of 1 to 30 parts by weight phr.

For producing the inventive terpolymer compositions, the generally known polymerization methods may be used. Starting from a blend of the monomers to be polymerized together with a free radicals-forming catalyst or a catalyst activatable by thermal energy, the polymerization is performed radically and/or thermally. polymerization may be in bulk or in a solution, with the latter term including the various form of emulsion and dispersion polymerization. If a radically initiated polymerization is used, the catalyst concentration preferably is within the range of 0.05 to 0.5 parts by weight of the initiator, relative to the total monomer weight. Suitable initiators are known and include benzoylperoxide, azo-bis-isobutyronitrile, peroxycarboxylate, di-tert butylperoxide and others.

A step-wise polymerization is particularly advantageous. A prepolymer is created which consists predominantly of the alkyl acrylate monomer and the strongly polar monomer, thereafter, the polymerization process is continued with under addition of the N-vinyl lactam or of a mixture of the N-vinyl lactam and the remaining strongly polar monomer so that polymer composition having a block structure will form which comprise an inner block substantially in the nature of a copolymer composition and outer blocks in which the N-vinyl lactam is dominant. This step-wise polymerization has several advantages as it results in the formation of specific terpolymer structures which, for example, are more hydrophobic in the inner block and more hydrophilic in the outer blocks. The polymerization may also be performed on a substrate or in mold-cast multilayered assemblies so that the sequential addition of the components in a bulk polymerization process results in the building up of specific layered structures.

The terpolymer compositions of the invention are preferably prepared by premixing together the monomers and and a photoinitiator. This premix is then partially polymerized to a viscosity in the range of from about 500 cps to about 50,000 cps to achieve a coatable syrup. Alternatively, the monomers can be mixed with a thixotropic agent such as fumed silica to achieve a coatable syrup composition.

This composition is coated onto a flexible carrier web and polymerized in an inert, i.e., oxygen free, atmosphere, e.g., a nitrogen atmosphere. A sufficiently inert atmosphere can be achieved by covering a layer of the photoactive coating with a plastic film which is substantially transparent to ultraviolet radiation, and irradiating through that film in air using fluorescent-type ultraviolet lamps which provide a total ultraviolet radiation dosage of about 500 millijoules. If, instead of covering the polymerizable coating, the photopolymerization is to be carried out in an inert atmosphere, the permissible oxygen content of the inert atmosphere can be increased by mixing into the polymerizable monomer an oxidizable tin compound as

taught in U.S. Patent No. 4,303,485 (Levens), incorporated herein by reference, which also teaches that such procedures will allow thick coatings to be polymerized in air.

In the case of solvent and emulsion polymerization processes, commonly known polymerization systems may be used. For emulsion polymerizations, the preferred initiators are potassium persulfate and the organic peroxide initiators.

The polymerization temperatures are determined by the kind of initiaticn and by the sequencing that may be employed. Conventional polymerization temperatures are within the range of room temperature (20° C) to 120° C, with temperatures of 40° C to 80° C being particularly practicable.

It is possible also to initially prepolymerize without an initiator and to then add a photoinitiator or a thermal initiator.

The solution or emulsion polymerization is carried out preferably in a polar solvent such as water, ethanol, glycol, ether or ester, with water-mixed system at times presenting certain advantages. The polymerized product is recovered by precipitation or by evaporating the solvent. Residual solvent is not unfavorable in the processing of the product into films or sheets if it can be evaporated in the subsequent curing treatment.

After the terpolymer compositions have been cast, sprayed or extruded to form sheets or films, they are cured in situ by ionizing, actinic or thermal radiation.

The adhesive compositions may be coated onto a backing or substrate prior to polymerization. This may be accomplished using any conventional means such as roller coating, dip coating or extrusion coating.

Without any commitment to a particular theory, it may be possible to explain the surprising conditions the inventive terpolymer compositions by the fact that the compositions were found to exhibit a modification of the carbonyl bridges actually observed for acrylic acid/acrylic alkyl ester such as IOA/AA by the incorporation of the carboxyl hydrogen as the N-vinyl lactam is included in the terpolymer, giving rise to certain internal strength conditions, which result in the abrasion resistance and toughness exhibited by the terpolymers of the invention. An interaction between the carboxyl hydrogen, e.g. the acrylic acid unit and the nitrogen atom of component (c) appears to have decisive importance for a bridging bond and an increase in internal strength by more than one order of magnitude.

These interactions are indicated in the simplified schematic shown below, with the interactions between the carboxyl hydrogen and the nitrogen atom of the heterocycle apparently being stronger than those between the carboxyl hydrogen and the carbonyl group, which exist in both the alkyl ester of the acrylic acid and in the hetero cycle. These interactions are probably ionic in nature; this assumption is supported by the fact that some salt formation on the acrylic acid units and certain cross-linking processes may result in a well-directed modification of properties.

As shown in Figures 3 and 4, the important physical properties have peaks in the area of a strongly polar to N-vinyl lactam ratio of 1:1, probably because this is also the most stable structure. These conditions can be explained roughly in terms of an inter-penetrating betaine structure, because the strongly polar monomer can be incorporated via the added polymer blend and can contribute to internal strength.

Interaction between the monomeric compounds AA and NVP:

(Before the copolymerization)

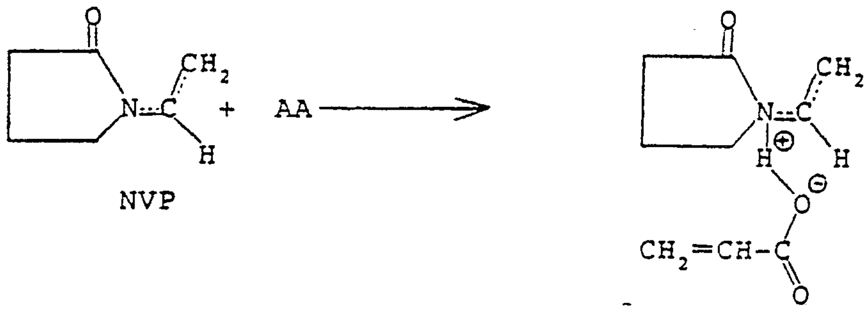

NVP

(After the copolymerization as a pair of copolymers:)

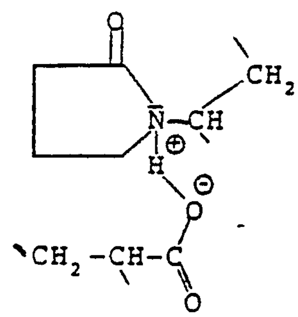

As confirmed by the results of experiments, it is possible to adjust the 1:1 mole ratio via a polymer blend (e.g. ethylene/acrylic acid copolymer as a polymer add) and then traverse a tensile strength peak. Such a peak is obtained also for the 50% modulus at lower tensile strength levels.

Surprisingly, an increase in internal strength is coupled with a drastic decrease or complete blocking of the adhesion properties, which again suggests intermolecular interactions. On steel surfaces, the inventive terpolymer compositions within the preferred composition polygons of Figure 1 showed no measurable adhesive bonding for a period of 20 minutes at room temperature or at 70 °C. The adhesive bonding ascertained after exposure to 120 °C for a period of 30 minutes is shown in Figure 5, which confirms that in the polar monomer equimolar range a valley occurs of about 1 Newton per 1.27 cm, while in the range of AA or NVP molar excess, the adhesive properties gradually reappear, though on a very low overall level. At an AA/NVP ratio of 1.2, the sealing effect of the terpolymer composition on steel is greater than the inherent strength of the sample (cohesion) so that the sample adheres irreversibly to the steel substrate.

The inventive terpolymer compositions are suited for an outstanding variety of applications, i.e., the cross-linked film polymer may be used as a tape backing material, with the backing itself and the coat of adhesive photopolymerized in a single trip by multilayer coating, as disclosed in U.S. Patent 4,818,610 (Zimmerman et al.). The terpolymers are also useful as protective films for various substrates, decorated, adhesive films, films and shaped components for safety structures, sealing of wood, cement, and other surfaces, transparent weather-resistant films, and the like.

The following examples are for illustrative purposes only, and should not be construed as limiting the invention. The scope of the invention is that which is defined by the claims.

## Test Methods.

For determining the various physical or chemical properties, the following measuring methods are used:

1)Adhesion at room temperature,

2)Adhesion at 120 °C,

3)Moisture absorption,
4)Resistance to gravel impact,
5)Impact toughness (Gardner impact),
6)Tensile strength/elongation,
7)Abrasion resistance,
8)Resistance to gasoline,
9)High-temperature shrinkage and flow stability,
10)Weathering resistance.

## (1) Adhesion at Room Temperature

A film sample is slit to a width of 1/2 inch (1.27 cm), transferred to a smooth stainless steel plate overrolled by a weight comprising a 2.04 kg hard rubber-coated steel roller, with 2 passes used in each direction. After 20 minutes of dwell time at 23° C, 90° peel is measured by moving the free end of the film away from the steel plate at a rate of about 0.5 cm per second (using a tensile tester).

Strong PSA-type polymer compositions were peel tested after having been reinforced with aluminum foil.

## (2) Adhesion at 120° C

As in (1), but pre-measurement conditioning of 20 minutes dwell time at 120° C on stainless steel.

## (3) Moisture Absorption

The film samples were weighed, immersed for 24 hrs. in totally desalted water and then removed by means of pincers. Adhering water was removed by letting it drip off-swabbing (1 hr. conditioning at room temperature). The samples were weighed again to determine the percentage of water absorbed by the polymer.

## (4) Gravel Impact

Standard SAE J 400 Test at -30° C film temperature. The film should not crack off.

## (5) Gardner Impact

The film samples are bonded to an aluminum sheet by means of a standard PSA and placed in a Gardner Impact Tester. A steel ball weighted with 2 kg is dropped on the test sheet from a height of 150 cm and causes the aluminum to sustain permanent deformation. The sample is deemed to have passed the test if it does not change color to white (film crystallization) and does not break or crack at room temperature and 50% air humidity.

## (6) Tensile strength/Elongation

Performed on a DIN test sample of 300 µm thickness using a tensile tester at 300 mm/min, room temperature and 50% air humidity.

(7) Abrasion Resistance (at room temperature and 50% air humidity)

A film sample 300 µm thick bonded to an Al sheet is abraded in 1000 cycles of a circular pattern using a Taber Abrasor test machine with an H18 abrasion wheel and 1000 g load. The result is evaluated as µm of abraded film gauge in percents relative to film gauge prior to the abrasion treatment.

(8) Resistance to Gasoline

The film is tested according to the standard General Motors GM E 60 225 test. The sample is deemed to have passed the test if it does not swell, wrinkle or dissolve superficially.

(9) High Temperature Shrinkage and Flow Resistance

A film sample 10 cm long and 300 µm thick is bonded to an Al sheet using a 50 µm coat of a standard PSA; the change in length is evaluated after 60 min. at 150 °C. With results less than 0.5%, the sample is deemed to have passed the test.

(10) Weathering

The film samples are tested in a Weather-o-Meter (WOM) according to ASTM E42, the cycle being as follows: 102 min. UV at 35 °C; 18 min. UV and water condensation at 60 - 80 °C alternating for 20 hrs; then electrode replacement and new cycle. The sample is deemed to have passed the test if the film does not show yellowing or cracks after 1000 hrs.

**Examples 1 to 28**

The following tabulated examples apply to a blend of the monomer specified UV-polymerized in bulk with about 0.05 to 0.5 parts by weight of a photoinitiator (such as Irgacure 651) in an inert atmosphere (nitrogen) or thermally polymerized in bulk under addition of a redox initiator (such as benzoylperoxide) until a syrupy mass of 1000 to 10,000 mPascals forms; where specified, the remainder of the anionic polar monomer and of the N-containing monomer were added.

After about 0.1 to 1 hr., a workable copolymer had formed which was coated on silicone-sized paper in a thickness of about 30 to 3000 µm and cured under UV radiation in a nitrogen atmosphere or with the syrup covered with a transparent film to form the corresponding film.

The compositions are described in Table II below and the physical characteristics and properties of the compositions are reported in Table III. The inventive films are also resistant to gravel impact, gasoline, and weathering. They are both shrink and flow resistant at temperatures up to 150 °C.

Table II

| Example | Trivial Design | Basic Composition (mole) | Basic Composition (mole %) | Type of Copolymer Material |
|---|---|---|---|---|
| 1<br>(Refer.) | 90/10 IOA/AA<br>- | 0.488 IOA<br>0.1388 AA. | 77.86 IOA<br>22.14 AA | Adhesive |
| 2<br>(Refer.) | IOA/NVP | 0.3419 IOA<br>0.198 NVP | 63.33 IOA<br>36.67 NVP | Adhesive |
| 3<br>(Refer.) | IOA/AA | 0.3419 IOA<br>0.198 AA | 63.33 IOA<br>36.67 AA | Adhesive |
| 4 | 0.58 Film | 0.3419 IOA<br>0.198 AA<br>(0.101)*<br>0.198 NVP | 46.33 IOA<br>26.83 AAA<br>26.83 | Forms non-adhesive film |
| 5 | 0.63 Film | 0.3419 IOA<br>0.216 AA<br>(0.1191)*<br>0.216 NVP | 44.18 IOA<br>27.91 AA<br>27.91 NVP | Forms non-adhesive film |
| 6 | 0.66 Film | 0.3419 IOA<br>0.2280 AA<br>(0.1309)*<br>0.2280 NVP | 42.85 IOA<br>28.58 AA<br>28.58 NVF | Forms non-adhesive film |
| 7 | 0.8 Film | 0.3419 IOA<br>0.2732 AA<br>(0.1762)*<br>0.2732 NVP | 38.49 IOA<br>30.76 AA<br>30.76 NVP | Forms non-adhesive film |
| 8 | 0.9 Film | 0.3419 IOA<br>0.3079 AA<br>(0.2109)*<br>0.3079 NVP | 35.7 IOA<br>32.15 AA<br>32.15 NVP | Forms non-adhesive film |

Table II (cont'd)

| Example | Trivial Design | Basic Composition (mole) | Basic Composition (mole %) | Type of Copolymer Material |
|---|---|---|---|---|
| 9 | 0.53 Film | 0.3419 IOA<br>0.180 AA<br>(0.0833)*<br>0.180 NVP | 48.71 IOA<br>25.64 AA<br>25.64 NVP | Forms non-adhesive film |
| 10 (Refer.) | 0.4 Film | 0.3419 IOA<br>0.1372 AA<br>(0.0402)*<br>0.1372 NVP | 55.48 IOA.<br>22.26 AA<br>22.26 NVP | Adhesive film |
| 11 (Refer.) | 0.3 Film | 0,3419 IOA<br>0.1025 AA<br>(0.0055)*<br>0.1025 NVP | 62.52 IOA<br>18.74 AA<br>18.74 NVP | Adhesive film |
| 12 (Refer.) | GFS Film | 0.3419 IOA<br>0.1128 AA<br>(0.0158)*<br>0.1025 NVP | 61.36 IOA<br>20.24 AA<br>18.39 NVP | Adhesive film |
| 13 (Refer.) | GFSS adhesive | 0.3419 IOA<br>0.097 AA<br>0.0684 NVP | 67.4 IOA<br>19.12 AA<br>13.48 NVP | Adhesive film |
| 14 | 0.8AA/NVP<br>0.58NVP/IOA | 0.3419 IOA<br>0,1582 AA<br>(0.0612)*<br>0.198 NVP | 48.98 IOA<br>22.66 AA<br>28.36 NVP | Forms non-adhesive film |
| 15 | 1.2AA/NVP<br>0.58NVP/IOA | 0.3419 IOA<br>0.2374 AA<br>(0,1404)*<br>0.198 NVP | 43.99 IOA<br>30.54 AA<br>25.47 NVP | Forms non-adhesive film |

Table II (cont'd)

| Example | Trivial Design | Basic Composition (mole) | Basic Composition (mole %) | Type of Copolymer Material |
|---|---|---|---|---|
| 16 | 0.63 Terban-"IPN" Film | 0.3419.IOA<br>0.216 AA<br>0.216 NVP<br>+<br>6 parts by w. "Therban"** | w/o IPN added, like ex.5 | Forms non-adhesive film |
| 17 | 0.58 EAA-"IPN" Film | 0.3419 IOA<br>0.1665 AA<br>0.198 NVP<br>+<br>11.35 parts b.w. "Primacor 5990"*** | Like ex.4, but w/AA from EAA copolymer | Forms non-adhesive film |
| 18 | 0.63 Additiv-Film | 0.3419 IOA<br>0.216 AA<br>0.216 NVP<br>+<br>0.55 parts b.w. $ZnCl_2$ (Lewis acid) | w/o additive, like ex. 5 | Forms non-Adhesive film |
| 19 | 0.63 Additiv-Film | 0.3419 IOA<br>0.216 AA<br>0.216 NVP<br>+<br>0.4 parts b.w. N-Methylpyrrolidon (basic solvent) | w/o additive, like ex. 5 | Forms non-adhesive film |

Table II (cont'd)

| Example | Trivial Design | Basic Composition (mole) | Basic Composition (mole %) | Type of Copolymer Material |
|---|---|---|---|---|
| 20 | 0.63 plast. film | 0.3419 IOA<br>0.216 AA<br>0.216 NVP<br>+<br>1 part b.w. plasticizer (DOP) | w/o plasticizer, like Ex. 5 | Forms non-adhesive film |
| 21 | 0.58 Film | 0.3419 IOA<br>0.198 AA<br>0.198 NVP<br>+<br>0.5 parts b.w. HDDA**** | w/o XL (HDDA) like ex. 4 | Forms non-adhesive film |
| 22 | 0.58 Filler | 0.3419 IOA<br>0.198 AA<br>0.198 NVP<br>+<br>6 parts Aerosil 972***** + 0.5 parts HDDA**** | w/o filler like ex. 4 | Forms non-adhesive film |
| 23 (Refer.) | | 0.5 IOA<br>0.0 AA<br>0.5 NVP | 50 IOA<br>0 AA<br>50 NVP | Adhesive film; extendable |
| 24 (Refer.) | | 0.4 IOA<br>0.0 AA<br>0.6 NVP | 40 IOA<br>0 AA<br>60 NVP | Adhesive film; extendable |
| 25 (Refer.) | | 0.3 IOA<br>0.0 AA<br>0.7 NVP | 30 IOA<br>0 AA<br>70 NVP | Film, brittle |

Table II (cont'd)

| Example | Trivial Design | Basic Composition (mole) | Basic Composition (mole %) | Type of Copolymer Material |
|---|---|---|---|---|
| 26 (Refer.) | | 0.2 IOA<br>0.4 AA<br>0.4 NVP | 20 IOA<br>40 AA<br>40 NVP | Film, brittle |
| 27 (Refer.) | | 0.5 IOA<br>0.5 AA<br>0.0 NVP | 50 IOA<br>50 AA<br>0 NVP | Film, extendable |
| 28 (Refer.) | | 0.0 IOA<br>0.0 AA<br>1.0 NVP | -<br>-<br>100 NVP | Brittle film |

* Mole AA (as syrup additive)

** Therban Hydrogenated nitrile caoutchouc, Bayer AG)

***EAA, Primacor 5990 (20% AA, Dow Chemical Company)

**** HDDA (Hexandioldiacrylat)

***** Aerosil 972 (hydrophobic Aerosil, Degussa AG)

TABLE III

Physical Properties

| Example | Tensil strength ($N/mm^2$) | Elongation (%) | PSA N/in., SS, RT 20 min. | Therm. activ., N/in., SS, 120°C | Moist. Absorp- (%$H_2O$) 24h imm., test | Impact toughn., trans. deform (+), cryst. fracture (-) | Abrasion resistance (% abrasion) |
|---|---|---|---|---|---|---|---|
| (Ref) 1 | 0.226 | 1,000 | 42 | - | - | - | - |
| (Ref) 2 | 2.0 | 1,380 | 44 | - | - | - | - |
| (Ref) 3 | 8.0 | 1,100 | 7 | - | - | - | - |
| 4 | 22.0 | 366 | (-) | (-) | 4.9 | (+) | 35 |
| 5 | 22.0 | 330 | (-) | (-) | - | (-) | 35 |
| 6 | 22.0 | 221 | (-) | (-) | 7.4 | (-) | 35 |
| 7 | 22.0 | 200 | (-) | (-) | - | (-) | 35 |
| 8 | 26.0 | 169 | (-) | (-) | 15.0 | (-) | 60 |
| 9 | 22.0 | 459 | (-) | (-) | - | (+) | 35 |
| 10 | 8.6 | 791 | 4.6 | 19.4 | - | (+) | 60 |
| (Ref) 11 | 6.7 | 1,015 | 14.2 | 72.1 | 1.4% | (+) | 90 |
| (Ref) 12 | 8.5 | 780 | 6.0 | 36.8 | - | - | - |
| (Ref) 13 | 5.4 | 1,045 | 17.0 | - | - | - | - |
| 14 | 15.0 | 350 | (-) | 7 | - | - | - |
| 15 | 17.0 | 480 | (-) | 10 | - | - | - |
| 16 | 14.0 | 318 | (-) | (-) | - | (+) | 25 |
| 17 | 18.0 | 415 | (-) | - | 2.9 | (+) | 25 |
| 18 | 18.0 | 348 | (-) | (-) | Water-sensitive | (+) | 35 |

TABLE III (cont'd.)

Physical Properties

| Example | Tensil strength ($N/mm^2$) | Elongation (%) | PSA N/in., SS, RT 20 min. | Therm. activ., N/in., SS, 120°C | Moist. Absorp- (%$H_2O$) 24h imm., test | Impact toughn., trans. deform (+), cryst. fracture (-) | Abrasion resistance (% abrasion) |
|---|---|---|---|---|---|---|---|
| 19 | 22.0 | 328 | (-) | (-) | Water-sensitive | (+) | - |
| 20 | 13.0 | 340 | (-) | 4 | - | (+) | - |
| 21 | 20.0 | 200 | (-) | (-) | - | (-) | 50 |
| 22 | 12.0 | 100 | - | - | - | (-) | - |
| (Ref) 23 | 9.7 | 795 | 54 | 117.0 | 14.0 | | |
| (Ref) 24 | 20.8 | 440 | (-) | 22 | 27 | (+) | |
| (Ref) 25 | 22.0 | 120 | (-) | 4.2 | 45 | (-) | |
| (Ref) 26 | 1.9 | 0.9 | (-) | 2.7 | 41 | (-) | |
| (Ref) 27 | 4.9 | 42.0 | (-) | 11.6 | 4.4 | (-) | |
| (Ref) 28 | 31.0 | 159.0 | (-) | (-) | Hom.water-soluble | (-) | |

The particularities of the film in its use as a paintable film are as follows:

The film of example 4 is preferred because it is temperature stable to 150 °C (paint drying cycles), it is paintable using conventional paint systems (excellent paint-to-film bond), it is stable under gravel impact also if painted, and it may be deep-drawn in the cold condition when less than 100 µm thick (important for coating the film on a substrate).

For example, a deep-drawable 100 µm film insert is coated with about 100 to 200 µm of adhesive (also UV cured,.e.g. the adhesive of example 1) so as to realize the adhesive coating thickness necessary for optimizing the gravel impact resistance of the paint-film-adhesive assembly.

Application of the adhesive coat to the film layer may be realized in the form of a subsequent UV curing step at the time of the UV film curing treatment (multifeed head, cascade cure) or by laminating the film and the adhesive.

The film adhesive composite is bonded to metal or plastic parts, deep-drawn into cavities or recesses, if any, and then painted. This obviates also the filler normally applied to the substrate prior to conventional painting.

## Claims

1. An abrasion resistant terpolymer comprising
(a) from about 25 mole % to about 65 mole % of an alkyl acrylate monomer, the alkyl groups of which have an average of 4 to 12 carbon atoms,,
(b) from about 10 mole % to about 50 mole % of a strongly polar monomer,
(c) from about 10 mole % to about 50 mole % of a moderately polar monomer selected from the group consisting of cyclic N-vinyl lactams,
wherein said strongly polar monomer and said N-vinyl lactam are present in a ratio of from about 0.8 to about 1.2, and said polar monomers are present in a ratio to said alkyl acrylate monomer of from about 0.4:1 to about 0.85:1.

2. An abrasion resistant terpolymer according to claim 1, said strongly polar monomer and said N-vinyl lactam are present in a ratio of about 1:1, and said polar monomers are present in a ratio to said alkyl acrylate monomer of about from about 0.55:1 to about 0.65:1.

3. An abrasion resistant terpolymer according to claim 2 wherein said strongly polar monomer is selected from the group consisting of acrylic acid, methacrylic acid, and alkali and ammonium and alkali earth metal salts of acrylic acid, itaconic acid, hydroxyalkyl acrylates, cyanoalkyl acrylates, acrylamides or substituted acrylamides, maleic acid, fumaric acid, lower-alkyl substituted maleic and fumaric acid, 1-propine or 2-propinecarboxylic acid ($CH=C-CH_2-COOH$) and the water soluble alkali, ammonium, substituted ammonium, and earth alkali salts thereof, and said N-vinyl lactam is selected from the group consisting of N-vinyl pyrrolidone, and N-vinyl caprolactam.

4. An abrasion-resistant terpolymer according to claim 1 where the alkyl acrylate monomer is isooctyl acrylate, the strongly polar monomer is acrylic acid, and the N-vinyl lactam is N-vinyl pyrrolidone.

5. An abrasion resistant terpolymer according to claim 1 having a composition inside a polygon defined in Figure 1 by boundaries E, F, G, H and I.

6. An abrasion resistant terpolymer according to claim 5 having a composition inside a polygon defined in Figure 1 by boundaries H, K, L, M and N.

7. An abrasion resistant terpolymer according to claim 1 further comprising from about 0.01 to about 1.0 part by weight of an initiator selected from thermal initiators and photoinitiators.

8. An abrasion resistant terpolymer according to claim 1 further comprising from about 0.01 to about 1.0 part by weight of a crosslinking agent selected from the group consisting of multifunctional acrylates, and chromophore substituted halomethyl-s-triazines.

9 An abrasion resistant terpolymer according to claim 1 having an abrasion strength of from 15% to 60%, a tensile strength of from about 5.0 to 35 $N/mm_2$, and an elongation at break of less than 800%.

10. A process for making an abrasion resistant film according to claim 1 comprising the steps of
a) prepolymerizing a blend of the alkyl acrylate monomer, and the strongly polar monomer to a conversion ratio of about 10%,
b) adding an N-vinyl lactam monomer, and
c) copolymerizing said monomers to a conversion rate of at least 95% by exposing said monomers to a source of radiation selected from ultraviolet radiation, and ionizing radiation.

11. A composition according to claim 1 made by a process selected from solvent polymerization and

emulsion polymerization.

12. A film comprising the abrasion resistant terpolymer of claim 1.

13. A substrate having coated on at least one side thereof the abrasion resistant terpolymer of claim 1.

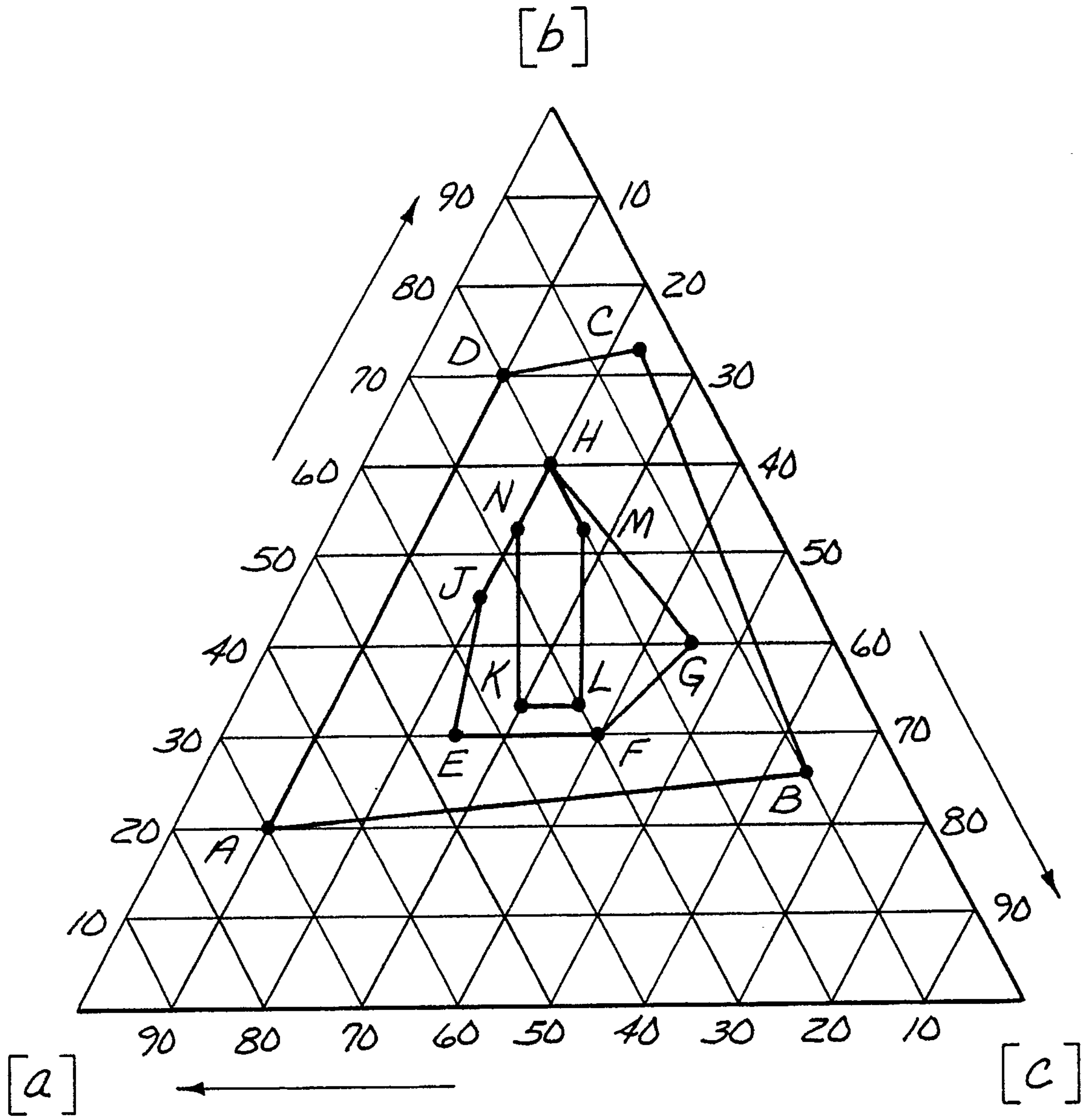
[b]
90
80
70
60
50
40
30
20
10
10
20
30
40
50
60
70
80
90
90 80 70 60 50 40 30 20 10
[a]
[c]
A
B
C
D
E
F
G
H
J
K
L
M
N

Fig. 1

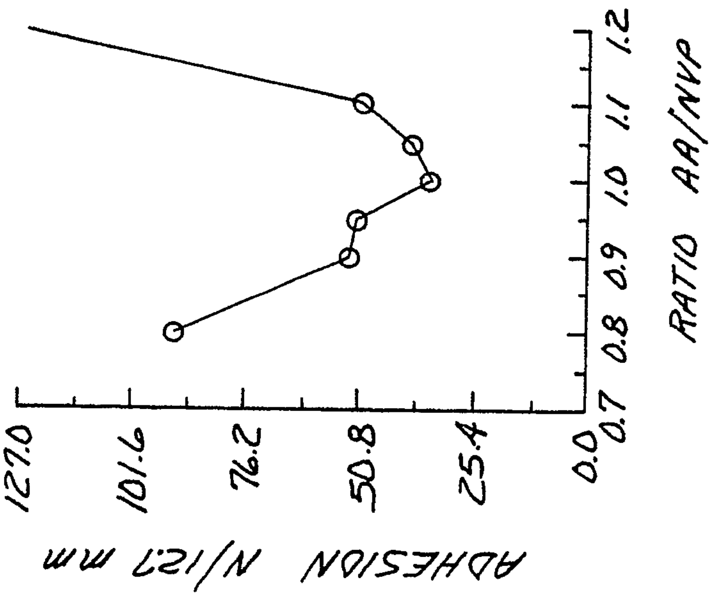
ADHESION N/12.7 mm
127.0
101.6
76.2
50.8
25.4
0.0
0.7
0.8
0.9
1.0
1.1
1.2
RATIO AA/NVP

Fig. 5

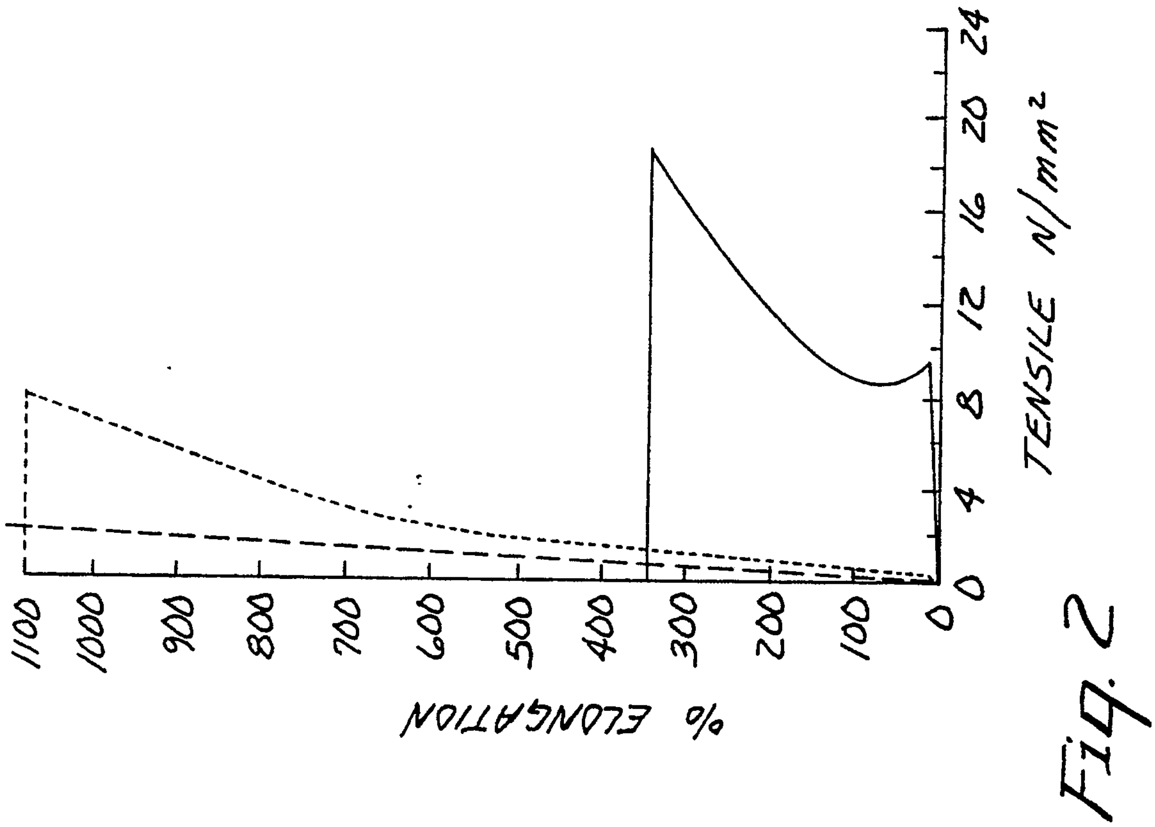
% ELONGATION
1100
1000
900
800
700
600
500
400
300
200
100
0
0
4
8
12
16
20
24
TENSILE N/mm²

Fig. 2

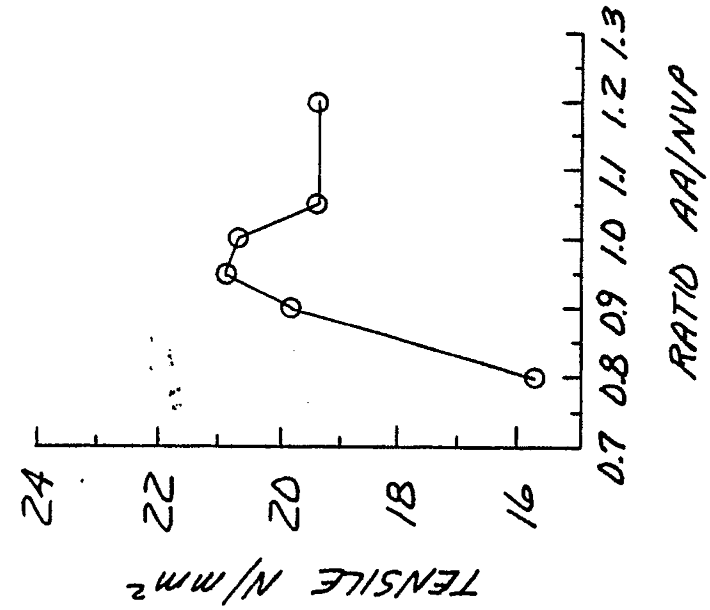
24
22
20
18
16
TENSILE N/mm²
0.7 0.8 0.9 1.0 1.1 1.2 1.3
RATIO AA/NVP

Fig. 3a

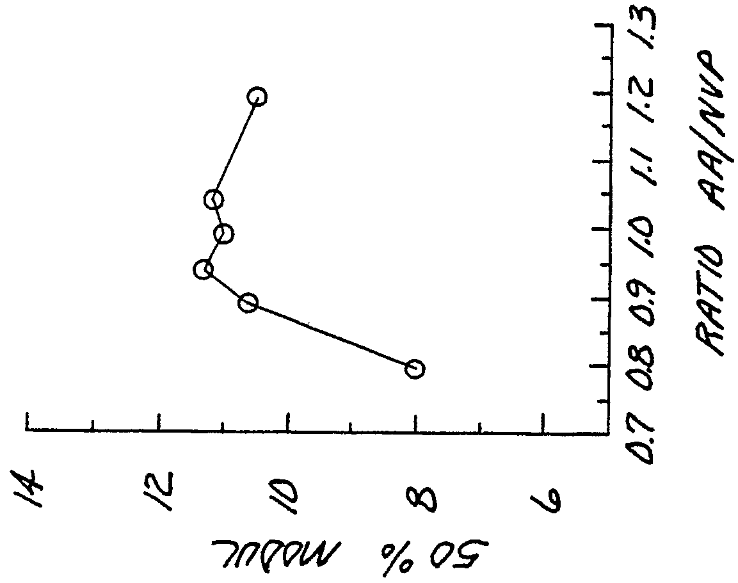
14
12
10
8
6
50 % MODUL
0.7 0.8 0.9 1.0 1.1 1.2 1.3
RATIO AA/NVP

Fig. 3b

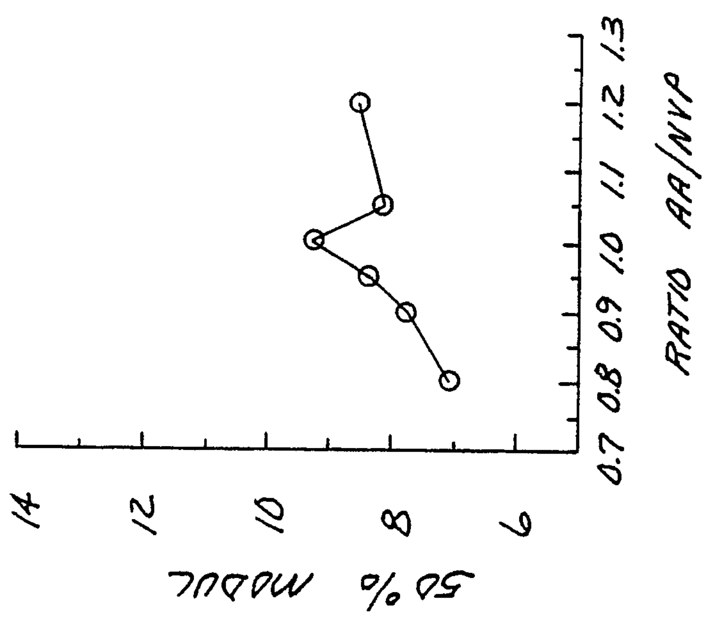
50 % MODUL
14
12
10
8
6
0.7 0.8 0.9 1.0 1.1 1.2 1.3
RATIO AA/NVP

Fig. 4b

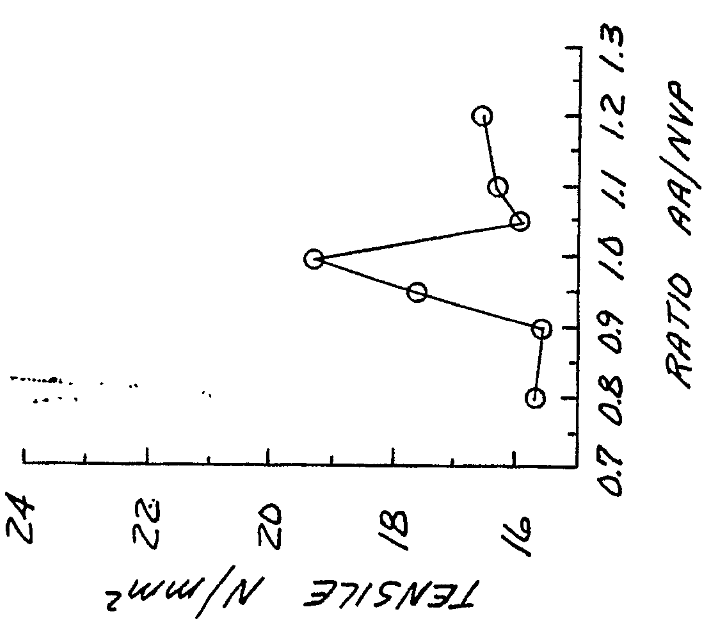
TENSILE N/mm2
24
22
20
18
16
0.7 0.8 0.9 1.0 1.1 1.2 1.3
RATIO AA/NVP

Fig. 4a